Europäisches Patentamt

European Patent Office

Office européen des brevets

(19)

(11) **EP 0 815 315 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(21) Anmeldenummer: **96905747.0**

(22) Anmeldetag: **19.03.1996**

(51) Int Cl.⁷: **D21C 7/12**, D21C 3/22, D21B 1/04, G05B 13/02

(86) Internationale Anmeldenummer:
**PCT/DE96/00477**

(87) Internationale Veröffentlichungsnummer:
**WO 96/29465 (26.09.1996 Gazette 1996/43)**

(54) **VERFAHREN UND VORRICHTUNG ZUR PROZESSFÜHRUNG BEI DER ZELLSTOFF- UND/ODER PAPIERHERSTELLUNG**

METHOD AND DEVICE FOR PROCESS CONTROL IN CELLULOSE AND PAPER MANUFACTURE

PROCEDE ET DISPOSITIF DE CONDUITE DU PROCESSUS DANS LA PRODUCTION DE CELLULOSE ET/OU DE PAPIER

(84) Benannte Vertragsstaaten:
**AT BE DE FI FR NL PT SE**

(30) Priorität: **23.03.1995 DE 19510008**

(43) Veröffentlichungstag der Anmeldung:
**07.01.1998 Patentblatt 1998/02**

(73) Patentinhaber: **SIEMENS AKTIENGESELLSCHAFT 80333 München (DE)**

(72) Erfinder: **FURUMOTO, Herbert D-91052 Erlangen (DE)**

(56) Entgegenhaltungen:
**EP-A- 0 590 430      DE-A- 3 418 267
US-A- 4 886 576**

- **DATABASE WPI Section Ch, Week 8142 Derwent Publications Ltd., London, GB; Class F09, AN 81-77347D XP002009947 & SU,A,798 215 (UKR CELL PAPER IND) , 23.Januar 1981**

## Beschreibung

Die Erfindung bezieht sich auf ein Verfahren und eine Vorrichtung zur Prozeßführung bei der Zellstoff- und/oder Papierherstellung unter Verwendung wenigstens einer Meßeinrichtung zur Erfassung von spektralen Kennwerten bei unterschiedlichen Wellenlängen und wenigstens einer Regel- oder Steuereinrichtung für die bei der Zellstoff- und/oder Papierherstellung benutzten Betriebsmittel.

Aus der EP 0 445 321 A1 ist ein Verfahren zur Herstellung von Zellstoff in einem kontinuierlichen Kocher bekannt, bei dem eine gewünschte Zellstoffqualität mit Hilfe einer sogenannten Qualitätsmaßzahl (Q) vorgegeben und mittels eines Prozeßmodells die zum Vorgabewert der Qualitätsmaßzahl (Q*) gehörige Kochtemperatur (T*) als Hauptsteuergröße vorgegeben wird. Dabei kann bereits zur Anpassung des Prozeßmodells an veränderte Betriebsbedingungen des Zellstoffkochers eine Adaption des Prozeßmodelles vorgesehen sein. Wesentlich ist dafür, daß mittels physikalischer Kennwerte die Zuführung von Holzschnitzeln als Prozeßvariable in das Prozeßmodell einbezogen wird. Weiterhin ist in der WO 94/20671 A1 eine Methode zur Regelung des Herstellungsprozesses von Zellulose beschrieben, bei der die Massendichte der für den Prozeß als Rohstoff zugeführten Holzhackschnitzel berücksichtigt und veränderbar vorgesehen ist, wozu entsprechende Proben genommen werden, letztere in einer Recheneinheit berücksichtigt und in Abhängigkeit von den Rechenergebnissen als Variable veränderbar ausgebildet sind. Schließlich wird mit der EP 0 590 433 A2 ein Steuerverfahren für die Herstellung von Zellstoff durch Druck- und Temperatursteuerung beschrieben, bei der der Herstellprozeß in zwei Phasen unterteilt ist, wobei in der ersten Phase der Kochung während der Aufheizung die Suspension aus Holzstoff und Kochflüssigkeit einem möglichst hohen Druck ausgesetzt ist und in der zweiten Phase der Kochung mit Fertigkochtemperatur der Druck abgesenkt wird.

Mit der älteren, nicht vorveröffentlichten internationalen Patentanmeldung WO 95/08019 A wird eine Vorrichtung zum Betrieb einer Anlage speziell zur Erzeugung von sogenanntem deinkten Zellstoff vorgeschlagen, welche zumindest eine Altpapieraufbereitung enthält, der eine Entwässerungsmaschine oder mindestens eine Papiermaschine nachgeschaltet ist. Dabei ist bereits eine Meßeinrichtung zur Erfassung spektraler und/oder physikalischer Kennwerte der Altpapiersuspension verwendet, die der Altpapieraufbereitung zugeführt wird bzw. diese durchläuft. Weiterhin sind dort Regel- oder Steuereinrichtungen für die Betriebsmittel der Altpapieraufbereitung verwendet und wird mindestens ein, in Form eines oder mehrerer paralleler neuronaler Netze ausgeführter Zustandsanalysator für die Altpapiersuspension vorgeschlagen, welcher mittels der Kennwerte der Meßeinrichtung Steuergrößen zur Prozeßführung an die Regel- oder Steuereinrichtungen der Betriebsmittel für die Altpapieraufbereitung ausgibt.

Bei der vorbeschriebenen Vorrichtung speziell zur Herstellung von deinktem Zellstoff unter Verwendung eines möglichst großen Anteiles von Altpapier wird insbesondere der Problematik Rechnung getragen, daß die Qualität des in die Anlage eingebrachten Altpapieren stark schwankt. Beispielsweise in Abhängigkeit von der jeweiligen Mischung des Altpapieres können stark veränderliche Anteile z.B. an bunten, illustrierten Papieren, grauen Zeitungspapieren, weißen Papieren, verschmutzten Papieren, Altbüchern z.B. mit Telefonbücher, Kartonagen, Verpackungen, beschichteten Papieren sowie weitere Verschmutzungen aller Art vorhanden sein. Die in der älteren Patentanmeldung vorbeschriebene Vorrichtung löst die Probleme in befriedigender Weise speziell für die Herstellung von deinktem Zellstoff.

Weiterhin wird in der US-A-4 886 576 eine Anlage zur Verwendung bei der Papierherstellung beschrieben, bei der einem oder mehreren Kochern zur Herstellung von Zellstoff aus Hackschnitzeln separate Einheiten von primären und sekundären Refinern zum Zermahlen der gekochten Hackschnitzel nachgeschaltet sind. Dabei werden an der Kochflüssigkeit, der sogenannten Zellstoff-Pulpe, UV-Absorptionsmessungen durchgeführt, wobei aus den Meßgrößen Steuer- bzw. Regelsignale einerseits für die Temperaturführung des Kochers und andererseits für die primäre Refinerstufe abgeleitet werden. Wesentlich ist dabei, daß die UV-Absorptionsmessungen an der Kochflüssigkeit mit nichtfester Konsistenz, insbesondere der Pulpe, durchgeführt werden, da deren UV-Spektrum durch die aus dem Holz herausgelösten Bestandteile beeinflußt wird.

Davon ausgehend ist es Aufgabe vorliegender Erfindung, das beim Stand der Technik zu bereits angewandte Meßprinzip so bei der Zellstoff- und/oder Papierherstellung einzusetzen, daß es für eine Vorwärtsregelung geeignet ist.

Die Aufgabe ist erfindungsgemäß dadurch gelöst, daß mit der Meßeinrichtung die spektralen Kennwerte wenigstens der Ausgangsstoffe bei der Zellstoffund/oder Papierherstellung erfaßt werden und daß die Ausgangsstoffe, entweder der Rohstoff "Holz" oder der Sekundärrohstoff "Altpapier" kontinuierlich an der Meßeinrichtung zur Erfassung der spektralen Kennwerte vorbeigeführt werden.

Im Rahmen der Erfindung werden in an sich bekannter Weise als Zustandsanalysatoren neuronale Netze zur Auswertung der spektralen Kennwerte eingesetzt. Insbesondere können damit vorteilhaft aus dem Holzalter und/ oder aus dem Anteil jeweiliger Holzspezie solche Steuergrößen abgeleitet werden, die für den Ligningehalt des Holzes maßgeblich sind. Solchermaßen abgeleitete Signale können beispielsweise zur Steuerung des zur Herstellung von Zellstoff- und/oder Papier notwendigen Kochers verwendet werden.

Die zugehörige Vorrichtung zur Durchführung des Verfahrens enthält wenigstens eine Meßeinrichtung zur Erfassung spektraler Kennwerte und wenigstens eine Regel- oder Steuereinrichtung für die eingesetzten Betriebsmittel, wobei die Meßeinrichtung ein Spektrometer zur Erfassung von Intensitätsmeßwerten bei unterschiedlichen Wellenlängen ist, von denen durch geeignete Auswertung Korrekturgrößen für die Regeloder Steuereinrichtung ableitbar sind. Es können zusätzliche Meßeinrichtungen in der Produktionslinie vorhanden sein, so daß gleichermaßen Kennwerte der Zwischen- und/oder Endprodukte erfaßt werden, woraus Signalgrößen auf die Steuer- oder Regeleinrichtung zurückgeführt werden.

Weitere Einzelheiten und Vorteile der Erfindung ergeben sich aus der Figurenbeschreibung von Ausführungsbeispielen anhand der Zeichnung in Verbindung mit den Unteransprüchen. Es zeigen:

FIG 1 ein Anwendungsbeispiel zur Erfassung der Qualität der Hackschnitzel als Ausgangsrohstoff für den chemischen Aufschluß zur Zellstoffherstellung,

FIG 2 die Auswerteeinrichtung für FIG 1,

FIG 3 ein Anwendungsbeispiel zur Beurteilung der Hackschnitzel für einen sog. Refiner ,

FIG 4 ein weiteres Beispiel für die Bewertung von Altpapier und

FIG 5 ein Anwendungsbeispiel für die Beurteilung eines sog. Holzschliffes

In den Figuren haben funktionsgleiche Teile gleiche Bezugszeichen. Die Figuren werden nachfolgend teilweise gemeinsam beschrieben.

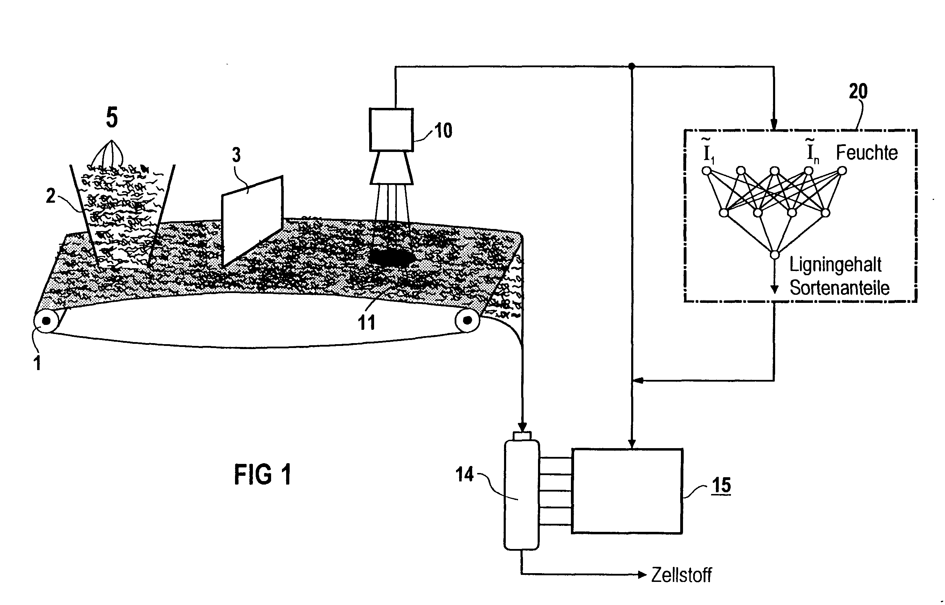

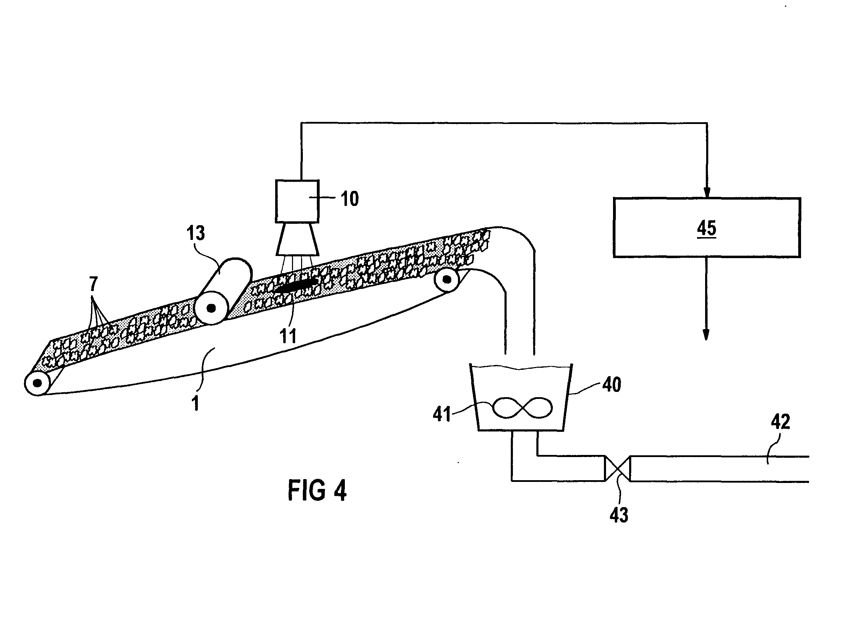

In FIG 1, 3 und 4 ist ein Förderband 1 zum Transport von Rohstoffen von einem Lager zum Ort der Weiterverarbeitung vorhanden. Zur Zellstoffherstellung gemäß FIG 1 handelt es sich dabei um Hackschnitzel 5, zur Papierherstellung gemäß FIG 4 um Altpapier 15. Die Rohstoffe werden über das Förderband 1 spezifischen Aufbereitungsanlagen zugeführt, die in den Figuren 1, 3 und 4 nur angedeutet sind. Über dem Förderband 1 ist ein Spektroskop bzw. Spektrometer 10 angebracht, mit dem eine Meßfläche 11 auf dem Förderband 1 erfaßt wird. Vor dem Analyseort 11 wird der Rohstoffstrom mittels eines Rakels 3 bei Hackschnitzeln 5, oder mittels einer Anpreßrolle 13 bei Altpapier 7, in der Höhe vergleichmäßigt und eingeebnet, damit reproduzierbare Meßwerte erfaßt werden können.

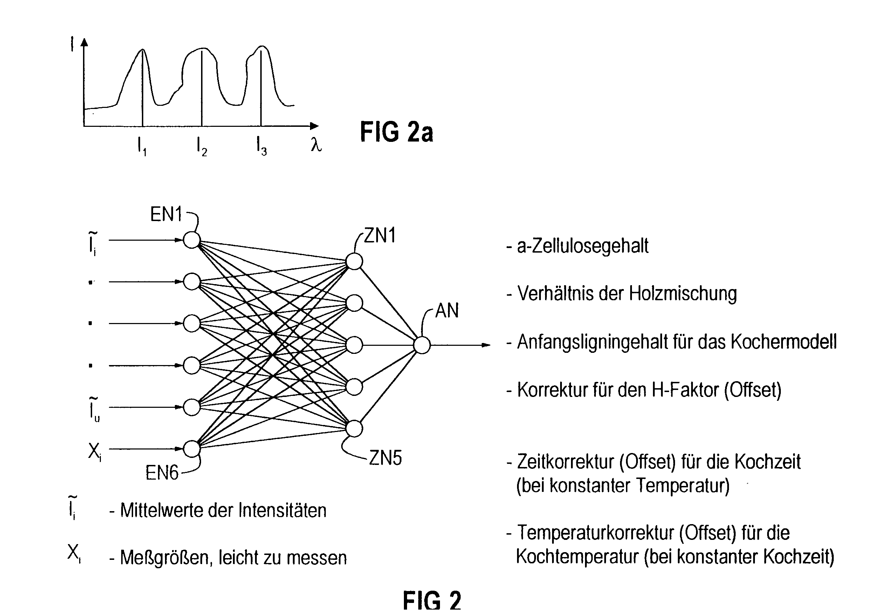

In FIG 1 ist angedeutet, daß die Hackschnitzel 5 vom Förderband 1 nach der Messung in einen Kocher 14 als Verarbeitungseinheit gelangen, der ein Kochermodell 15 zur Prozeßsteuerung zugeordnet ist. Letzteres Kochermodell 15 wird von den Signalen des Spektrometers 10 unter Zwischenschaltung einer Auswerteeinheit 20 angesteuert, welche im einzelnen anhand FIG 2 beschrieben wird. Vom Kocher 14 gelangt das Fertigprodukt "Zellstoff" zur Weiterverarbeitung in diesbezügliche Produktionsanlagen, beispielsweise eine Papiermaschine zur Papier- und/oder Kartonherstellung.

In FIG 2 ist die Auswerteeinheit der FIG 1 als dreischichtiges Neuronales Netz dargestellt, das beispielhaft aus Eingangsneuronen EN 1 bis EN 6, weiteren Neuronen ZN 1 bis ZN 5 und einem Ausgangsneuron AN besteht. Mit dem neuronalen Netz 20 wird das Spektrum des Spektrometers 10 ausgewertet, wobei als Eingänge für das neuronale Netz 20 die Rückstrahlintensitäten $I_i$ mit i=1,...,n von bevorzugten Wellenlängen $\lambda_i$ der schematischen Darstellung gemäß FIG 2a verwendet werden.

Neben den Wellenlängen $I_i$ bis $I_n$ können vorteilhafterweise weitere relativ einfach zu messende Rohstoffeigenschaften - wie beispielsweise die Feuchtigkeit und die Dichte bzw. Schüttdichte - als zusätzliche Eingangsgrößen für das neuronale Netz 20 benutzt werden.

Am Ausgang A des neuronalen Netzes 20 können wichtige für die Prozeßführung des Aufbereitungsvorganges benötigte Rohstoffeigenschaften, wie insbesondere der Anteil an verschiedenen Holzsorten erhalten werden, die in FIG 2 im einzelnen aufgelistet sind. Beispielhaft kann bei Verwendung von *Eukalyptus* einerseits und *Fichte* andererseits als Rohstoffe die **Eukalyptus/Fichte**-Mischung für den Sulfataufschluß bestimmt werden. Anhand des Mischungsverhältnisses wird daraus die Anfangs-Lignin-Konzentration berechnet, welche die wesentliche Größe für die Steuerung des Kochprozesses ist. Es ergibt sich:

$$CL_{gesamt} = x^*{}_{CL\ Eukalyptus} + (1-x)^*CL_{Fichte}.$$

Bei gleicher Holzspezie kann die angegebene Methode auch zur Bestimmung des Anfangs-Ligningehaltes des eingesetzten Rohholzes benutzt werden. Der ermittelte Wert ist eine Maßzahl für den Zellstoffaufschluß, d.h. eine Aussage dafür, ob sich das Holz leicht oder schwer aufschließen läßt.

Aus den Meßwerten läßt sich weiterhin der Zellulosegehalt des Holzes, insbesondere bei *Eukalyptus Globulus,* abschätzen. Daneben ist es vorteilhaft, mit dem Spektrum über das Neuronale Netz eine Modellkorrektur für das Kochermodell 15 gemäß FIG 1 zu bestimmen. Setzt man z.B. für die Steuerung des Sulfatzellstoffes das bekannte H-Faktor-Modell ein, so kann die Holzqualität durch einen Offset zum H-Faktor berücksichtigt werden. Damit wird eine Vergleichmäßigung der Qualität des erzeugten Zellstoffes erreicht.

Neben den angegebenen Größen ist mit dem Auswerteschema gemäß FIG 2 weiterhin eine Zeitkorrektur bzw. ein Offset für die Kochzeit bei vorgegebener konstanter Temperatur oder aber auch bei konstanter Kochzeit eine Temperaturkorrektur bzw. ein diesbezüglicher Offset für die Kochtemperatur möglich.

Beide Korrekturgrößen sind vorteilhafterweise zur Bestimmung des Kochermodells 15 gemäß FIG 1 verwertbar.

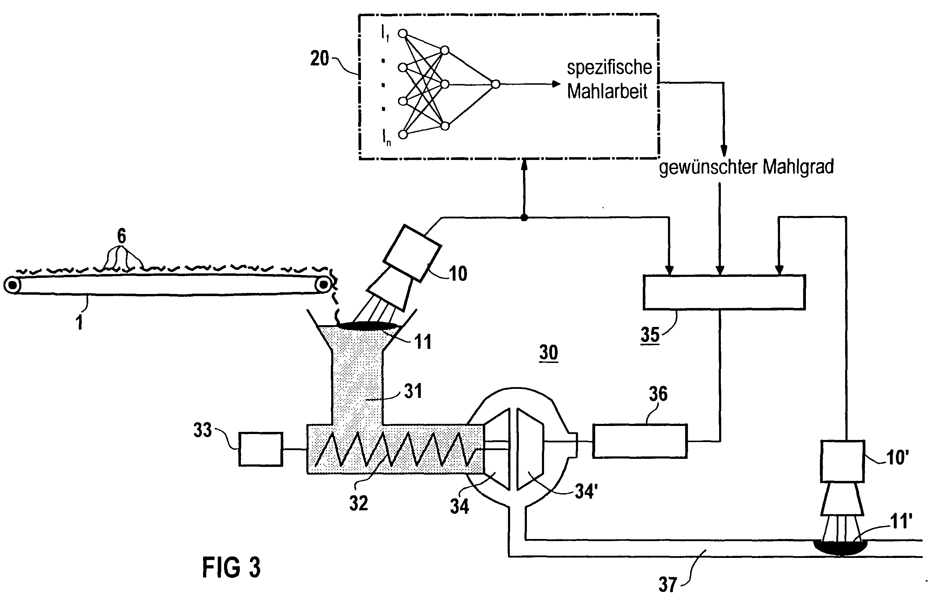

Speziell in der FIG 3 werden Hackschnitzel 5 von einem Förderband in eine sogenannte Refineranordnung 30 gegeben. Letztere besteht aus einem Trichter 31, einer nachfolgenden über einen Motor 32 angetriebenen Schnecke 33 den Mahlscheiben 34 und 34', die ebenfalls durch einen Motor 36 angetrieben werden, und einen zugehörigen Ausgangsschacht 37. Dem Refiner 30 ist eine Steuereinheit 35 zugeordnet.

Entsprechend FIG 1 ist in FIG 3 ein erstes Spektrometer 10 vorhanden, welches alternativ zur Anordnung über dem Förderband direkt auf den Eingangstrichter 31 des Refiners 30 gerichtet ist und somit den Trichter als Meßfläche abdeckt. Durch das dem Spektrometer 10 nachgeschaltete Neuronale Netz 20 wird unter Berücksichtigung der Spektrallinien $I_1$ bis $I_n$ und weiterer Parameter die spezifische Mahlarbeit bestimmt, die zusammen mit dem gewünschten Mahlgrad die Eingangsgrößen für die Steuerung 35 bilden.

In der Anordnung gemäß FIG 3 ist ein weiteres Spektrometer 10' dem Ausgangsschacht 37 für das Mahlprodukt zugeordnet. Dem Spektrometer 10' ist ein FIG 2 entsprechendes, nicht im einzelnen dargestelltes neuronales Netz 20 zugeordnet, mit dem die Qualität des Ausgangsproduktes berücksichtigt und als Einflußgröße auf die Steuereinheit 35 zurückgeführt werden kann.

Übliche Refiner haben einen hohen Energiebedarf. Durch ein problemangepaßtes Zerfasern kann im Refiner 30 gemäß FIG 3 die erforderliche spezifische Mahlarbeit, die stark von der Holzqualität abhängt, vorausbestimmt und somit minimiert werden. Insgesamt wird Energie eingespart und die Qualität der gemahlen Faser vergleichmäßigt.

In FIG 4 wird auf dem Förderband 1 speziell Altpapier 15 befördert, das in einen sogenannten Pulper 40 mit Drehquirl 41 oder in eine nicht dargestellte Auflösetrommel zur Altpapieraufbereitung gegeben wird. Dem Pulper 40 schließt sich eine nicht im einzelnen dargestellte Stoffaufbereitung an, wohin eine mit einem Ventil 43 versehene Auslaufrinne 42 läuft.

Entsprechend FIG 1 ist ein Spektrometer 10 über dem Förderband 1 mit Meßfläche 11 auf dem durch die Andruckrolle 13 vergleichmäßigtem Altpapier 7 angeordnet, mit dem nunmehr unmittelbar das Altpapier als Rohstoff erfaßt wird Entsprechend FIG 3 ist dem Spektrometer 10 ein neuronales Netz 20 nachgeschaltet, dessen Ausgangssignal auf eine Steuereinheit 45 gegeben wird, mit dem die Aufbereitungsanlage gesteuert wird. Durch Einschaltung eines neuronalen Netzes können der Aufbereitung unterschiedlicher Altpapiere die sich ändernde Qualität der in den Produktionsprozeß eingebrachten Altpapiere unmittelbar berücksichtigt werden. Letzteres erfolgt im wesentlichen entsprechend dem Verfahren, das in der eingangs zitierten, älteren Patentanmeldung im einzelnen vorbeschrieben ist.

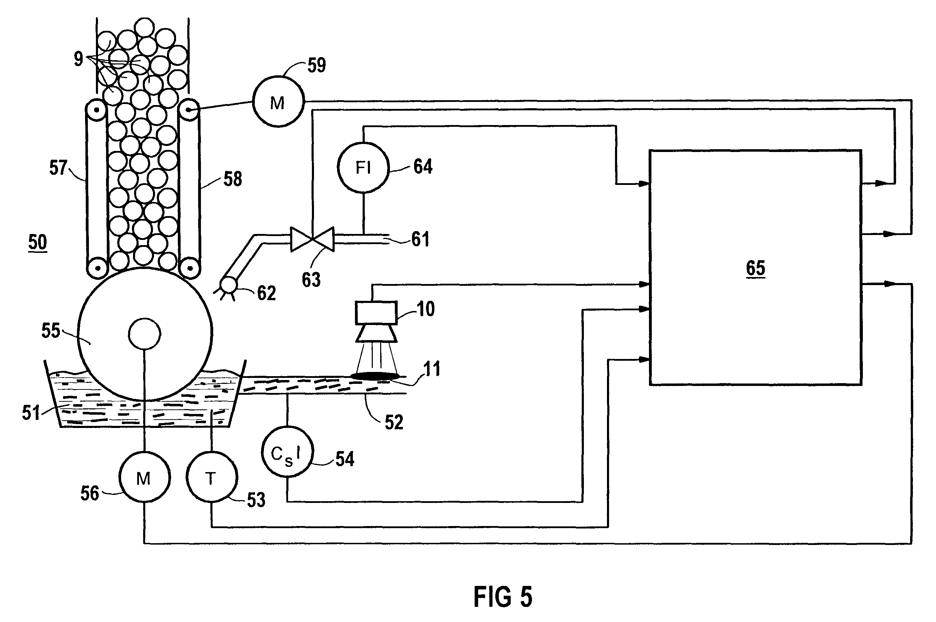

In FIG 5 gelangen Baumstämme 9 als Rohstoff in eine Holzschliffanlage 50, die im wesentlichen aus einem mit Wasser gefüllten Trog 51 mit einer rotierenden Schleifwalze 55 und rakelbewehrten Förderbandern 57 und 58 besteht. Auf die Schleifwalze 55 wird über wenigstens eine Spritzdüse 62 mit Ventil 63 Spritzwasser aus einer Leitung 61 gegeben.

Die Schleifwalze 55 und die Förderbänder 57 bzw. 58 werden über separate Motoren 56 und 59 angetrieben, die von einer Steuereinheit 65 mit einem Schleifermodell hinsichtlich ihrer Drehzahlen, die maßgeblichen Einfluß auf das Schliffprodukt haben, ansteuerbar sind. Weiterhin ist die Menge des Spritzwassers über das Ventil 63 veränderbar.

Der Trog 51 hat eine Ablaufrinne 52, deren Überlaufhöhe einstellbar sein kann. Im Trog 51 werden die Wassertemperatur T mit einem Sensor 53, in der Ablaufrinne 52 die Konsistenz der ablaufenden Wasser/ Holzschliff-Mischung mit einem Sensor 54 gemessen und in die Einrichtung 65 gegeben. Weiterhin wird üblicherweise der Durchsatz an Spritzwasser mit einer Meßeinrichtung 64 erfaßt.

Am Holzschliff in der Ablaufrinne 52 wird mit dem Spektrometer 10 gemesen, wobei die Meßfläche 11 in der Ablaufebene liegt. Das Meßsignal wird nach Bewertung in einem neuronalen Netz entsprechend FIG 2 dem Schleifermodell der Einrichtung 65, z.B. zur Quasimahlgrad-Regelung, zugeführt.

Wesentlich ist bei vorliegender Erfindung über die Beschreibung der Einzelbeispiele hinaus, daß in einem durchgehenden Fertigungsprozeß bei der Zellstoff- und Papierherstellung unter Einschluß der Altpapieraufbereitung durch wenigstens ein, gegebenenfalls aber mehrere, an geeigneter Stelle des Produktionsprozesses angeordnete Spektrometer und entsprechender Signalauswertung jeweils Aussagen über die Qualität des zu erwartenden Zwischen- und/oder Endproduktes abgeleitet werden können. Durch die Kombination der einzelnen Aussagen lassen sich an verschiedener Stelle Korrekturgrößen in den Regelprozeß einbringen, wodurch insgesamt eine Qualitätsverbesserung erreicht wird.

**Patentansprüche**

1. Verfahren zur Prozeßführung bei der Zellstoff- und/oder Papierherstellung unter Verwendung wenigstens einer Meßeinrichtung zur Erfassung von spektralen Kennwerten bei unterschiedlichen Wellenlängen und wenigstens einer Regel- oder Steuereinrichtung für die bei der Zellstoff- und/oder Papierherstellung benutzten Betriebsmittel, **dadurch gekennzeichnet,** daß die spektralen Kennwerte wenigstens an den Ausgangsstoffen (5, 6, 9, 7) bei der Zellstoff- und/oder Papierherstellung erfaßt werden und daß die Ausgangsstoffe, entweder der Rohstoff "Holz" (5, 6, 9) oder der Sekundärrohstoff "Altpapier" (7) kontinuierlich an der Meßeinrichtung (10, 10') zur Erfassung der spektralen Kennwerte vorbeigeführt werden.

**2.** Verfahren nach Anspruch 1, **dadurch gekennzeichnet,** daß als Rohstoff "Holz" die zur Kochung bestimmten Holzhackschnitzel (5) verwendet werden.

**3.** Verfahren nach Anspruch 1, **dadurch gekennzeichnet,** daß als Rohstoff "Holz" die zur Zerfaserung bestimmten Holzhackschnitzel(6) und/oder das daraus erzeugte Mahlprodukt verwendet werden.

**4.** Verfahren nach Anspruch 1, **dadurch gekennzeichnet,** daß als Rohstoff "Holz" das aus Baumstämmen (9) erzeugte Schliffprodukt verwendet wird.

**5.** Verfahren nach Anspruch 1, **dadurch gekennzeichnet,** daß die Ausgangsgrößen wenigstens der Meßeinrichtung (10,10') für die spektralen Kennwerte von einem neuronalen Netz (20) bewertet und daß daraus Aussagen über die Produktqualität der Ausgangsstoffe für die Zellstoff- und/oder Papierherstellung abgeleitet werden.

**6.** Verfahren nach Anspruch 5 unter Verwendung eines Zellstoffkochers für Holzhackschnitzel, **dadurch gekennzeichnet,** daß aus den spektralen Kennwerten das Alter des Holzes bestimmt und daß daraus Steuergrößen für die Betriebstemperatur des Zellstoffkochers abgeleitet werden.

**7.** Verfahren nach Anspruch 6, **dadurch gekennzeichnet,** daß aus dem Holzalter und/oder dem Anteil der Holzspezies der Ligningehalt bestimmt wird und daß daraus Korrekturgrößen für die Steuerung des Zellstoffkochers abgeleitet werden.

**8.** Verfahren nach Anspruch 3 unter Verwendung eines Refiners für Holzhackschnitzel, **dadurch gekennzeichnet,** daß aus den spektralen Kennwerten die mechanischen Eigenschaften des Holzes und daß daraus Steuergrößen für den Refiner zur Zerfaserung des Rohstoffes "Holz" abgeleitet werden.

**9.** Verfahren nach Anspruch 8, **dadurch gekennzeichnet,** daß aus den Holzparametern Korrekturgrößen für die Mahlarbeit des Refiners abgeleitet werden.

**10.** Verfahren nach Anspruch 1 unter Verwendung eines Pulpers für Altpapier, **dadurch gekennzeichnet,** daß aus den spektralen Kennwerten die spezifischen Eigenschaften des verwendeten Altpapiers bestimmt werden und daß daraus Steuergrößen zum Betrieb des Pulpers abgeleitet werden.

**11.** Verfahren nach Anspruch 4 unter Verwendung einer Holzschliffanordnung für Baumstämme, **dadurch gekennzeichnet,** daß aus den spektralen Kennwerten die mechanischen Eigenschaften des Holzes bestimmt werden und daß daraus Steuergrößen für die Holzschliffanordnung abgeleitet werden.

**12.** Verfahren nach Anspruch 11, **dadurch gekennzeichnet,** daß die mechanischen Eigenschaften des Holzes einem Schleifermodell eingegeben werden.

**13.** Vorrichtung mit Mitteln zur Durchführung des Verfahrens nach Anspruch 1 oder einem der Ansprüche 2 bis 12, mit wenigstens einem Spektrometer (10, 10') zur Erfassung von Intensitätsmeßwerten ($I_1$ bis In) bei unterschiedlichen Wellenlängen ($\lambda_i$ mit i = 1, ..., n) an den Rohstoffen "Holz" oder "Altpapier" als Ausgangsstoffe für die Zellstoff- und/oder Papierherstellung und mit Mitteln (1, 51) zum kontinuierlichen Vorbeiführen der Ausgangsstoffe für die Zellstoff- und/oder Papierherstellung am Spektrometer (10, 10'), wobei durch geeignete Auswertung der Intensitätsmeßwerte ($I_1$ bis In) Korrektursignale für eine Regel- oder Steuereinrichtung (15,35, 45) für die eingesetzten Betriebsmittel ableitbar sind.

**14.** Vorrichtung nach Anspruch 13, **dadurch gekennzeichnet,** daß zur Auswertung der Intensitätsmeßwerte ($I_1$ bis $I_n$) wenigstens ein neuronales Netz (20) vorhanden ist.

## Claims

**1.** Method for process management in the production of pulp and/or paper, using at least one measuring device for registering spectral characteristic values at different wavelengths and at least one regulating or controlling device for the operating means used in the production of pulp and/or paper, characterized in that the spectral characteristic values from at least the starting materials (5, 6, 9, 7) are registered in the production of pulp and/or paper, and in that the starting materials, either the raw material "wood" (5, 6, 9) or the secondary raw material "waste paper" (7) is continuously passed by the measuring device (10, 10') for registering the spectral characteristic values.

**2.** Method according to Claim 1, characterized in that the wood chips (5) intended for digestion are used as the raw material "wood".

**3.** Method according to Claim 1, characterized in that the wood chips (6) intended for defibring and/or the beaten product produced therefrom are used as the raw material "wood".

4. Method according to Claim 1, characterized in that the ground product produced from logs (9) is used as the raw material "wood".

5. Method according to Claim 1, characterized in that the starting variables at least from the measuring device (10, 10') for the spectral characteristic values are evaluated by a neural network (20) and in that statements are derived from these about the product quality of the starting materials for the production of pulp and/or paper.

6. Method according to Claim 5, using a pulp digester for wood chips, characterized in that the age of the wood is determined from the spectral characteristic values and in that controlled variables for the operating temperature of the pulp digester are derived from this.

7. Method according to Claim 6, characterized in that, from the age of the wood and/or the proportion of the wood species, the lignin content is determined and in that correction variables for the control of the pulp digester are derived from this.

8. Method according to Claim 3, using a refiner for wood chips, characterized in that the mechanical properties of the wood are derived from the spectral characteristic values and in that controlled variables for the refiner for defibring the raw material "wood" are derived from these.

9. Method according to Claim 8, characterized in that correction variables for the beating work of the refiner are derived from the wood parameters.

10. Method according to Claim 1, using a pulper for waste paper, characterized in that the specific properties of the waste paper used are determined from the spectral characteristic values and in that controlled variables for operating the pulper are derived from these.

11. Method according to Claim 4, using a groundwood arrangement for logs, characterized in that the mechanical properties of the wood are determined from the spectral characteristic values and in that control variables for the groundwood arrangement are derived from these.

12. Method according to Claim 11, characterized in that the mechanical properties of the wood are entered into a grinder model.

13. Device having means for carrying out the method according to Claim 1 or one of Claims 2 to 12, having at least one spectrometer (10, 10') for registering intensity measured values ($I_1$ to $I_n$) at different wavelengths ($\lambda_i$ with i=1, ..., n) on the raw materials "wood" or "waste paper" as starting materials for the production of pulp and/or paper, and having means (1,51) for continuously passing the starting materials for the production of pulp and/or paper past the spectrometer (10, 10'), it being possible, by means of suitable evaluation of the intensity measured values ($I_1$ to $I_n$), to derive correction signals for a regulating or controlling device (15, 35, 45) for the operating means used.

14. Device according to Claim 13, characterized in that there is at least one neural network (20) for evaluating the intensity measured values ($I_1$ to $I_n$).

## Revendications

1. Procédé de pilotage de processus lors de la fabrication de cellulose et/ou de papier, avec utilisation d'au moins un dispositif de mesure pour détecter des valeurs caractéristiques spectrales pour des longueurs d'onde différentes et avec utilisation d'au moins un dispositif de régulation et/ou de commande pour les moyens de production utilisés pour la fabrication de cellulose et/ou de papier, caractérisé en ce que l'on détecte les valeurs caractéristiques spectrales au moins sur les matières (5, 6, 9, 7) de départ lors de la fabrication de cellulose et/ou de papier et en ce que l'on fait passer les matières de départ, soit la matière première "bois" (5, 6, 9) ou la matière secondaire "vieux papier" (7), en continu devant le dispositif (10, 10') de mesure pour détecter les valeurs caractéristiques spectrales.

2. Procédé suivant la revendication 1, caractérisé en ce que l'on utilise comme matière première : "bois" les copeaux (5) de bois prévus pour le lessivage.

3. Procédé suivant la revendication 1, caractérisé en ce que l'on utilise comme matière première : "bois" les copeaux (6) de bois prévus pour le déchiquetage et/ou le produit raffiné obtenu à partir de ceux-ci.

4. Procédé suivant la revendication 1, caractérisé en ce que l'on utilise comme matière première : "bois" le produit de défibrage obtenu à partir de troncs (9) d'arbres.

5. Procédé suivant la revendication 1, caractérisé en ce que l'on estime les grandeurs de sortie d'au moins le dispositif (10, 10') de mesure pour les valeurs caractéristiques spectrales par un réseau (20) neuronal et en ce que l'on en dérive des prédictions sur la qualité du produit des matières de départ pour la fabrication de cellulose et/ou de papier.

6. Procédé suivant la revendication 5, avec utilisation d'un lessiveur de cellulose pour copeaux de bois, caractérisé en ce que l'on détermine à partir des valeurs caractéristiques spectrales l'âge du bois et en ce que l'on en dérive des grandeurs de commande pour la température de fonctionnement du lessiveur de cellulose.

7. Procédé suivant la revendication 6, caractérisé en ce que l'on détermine à partir de l'âge du bois et/ou de la proportion de la sorte de bois la teneur en lignine et en ce que l'on en dérive des valeurs de correction pour la commande du lessiveur de cellulose.

8. Procédé suivant la revendication 3, avec utilisation d'un raffineur pour des copeaux de bois, caractérisé en ce que l'on détermine à partir des valeurs caractéristiques spectrales les propriétés mécaniques du bois et en ce que l'on en dérive des grandeurs de commande pour le raffineur en vue du déchiquetage de la matière première : "bois".

9. Procédé suivant la revendication 8, caractérisé en ce que l'on dérive des paramètres du bois des valeurs de correction pour le travail de raffinage du raffineur.

10. Procédé suivant la revendication 1, avec utilisation d'un pulpeur pour vieux papiers, caractérisé en ce que l'on détermine à partir des valeurs caractéristiques spectrales les propriétés spécifiques du vieux papier utilisé et en ce que l'on en dérive des grandeurs de commande pour le fonctionnement du pulpeur.

11. Procédé suivant la revendication 4, avec utilisation d'un dispositif de défibrage du bois pour troncs d'arbres, caractérisé en ce que l'on détermine à partir des valeurs caractéristiques spectrales les propriétés mécaniques du bois et en ce que l'on en dérive des grandeurs de commande pour le dispositif de défibrage du bois.

12. Procédé suivant la revendication 11, caractérisé en ce que l'on entre les propriétés mécaniques du bois dans un modèle de défibreur.

13. Dispositif comportant des moyens pour la mise en oeuvre du procédé suivant la revendication 1 ou l'une des revendications 2 à 12, comportant au moins un spectromètre (10, 10') pour détecteurs des valeurs ($I_1$ à $I_n$) de mesure d'intensité pour des longueurs d'onde différentes ($\lambda_i$ avec $i = 1, ..., n$) sur les matières premières : "bois" ou : "vieux papier" comme matière de départ pour la fabrication de cellulose et/ou de papier et comportant des moyens (1, 51) pour faire passer en continu les matières de départ pour la fabrication de cellulose et/ou de papier devant le spectromètre (10, 10'), des signaux de correction pour un dispositif (15, 35, 45) de régulation et/ou de commande pour les moyens de production utilisés pouvant être dérivés par exploitation adéquate des valeurs ($I_1$ à $I_n$) de mesure d'intensité.

14. Dispositif suivant la revendication 13, caractérisé en ce qu'il est présent au moins un réseau (20) neuronal pour l'exploitation des valeurs ($I_1$ à $I_n$) de mesure d'intensité.

**FIG 1**

EP 0 815 315 B1

FIG 2a

- a-Zellulosegehalt

- Verhältnis der Holzmischung

- Anfangsligningehalt für das Kochermodell

- Korrektur für den H-Faktor (Offset)

- Zeitkorrektur (Offset) für die Kochzeit
  (bei konstanter Temperatur)

- Temperaturkorrektur (Offset) für die
  Kochtemperatur (bei konstanter Kochzeit)

$\tilde{I}_i$  - Mittelwerte der Intensitäten

$X_i$  - Meßgrößen, leicht zu messen

FIG 2

EP 0 815 315 B1

FIG 3

FIG 4

EP 0 815 315 B1

FIG 5